# EUROPEAN PATENT APPLICATION

(11) **EP 4 700 659 A1**
(43) Date of publication of application: **25.02.2026**
(21) Application number: 24206835.1
(22) Date of filing: 16.10.2024
(51) Int. Cl.: G06N 3/09

(54) **SOFTWARE APPLICATION LABEL MANAGEMENT FOR MACHINE LEARNING**

(30) Priority: 22.08.2024 US 202418812178
(71) Applicant: SAP SE, 69190 Walldorf (DE)
(72) Inventor: Eberlein, Peter, 69190 Walldorf (DE); Driesen, Volker, 69190 Walldorf (DE)
(74) Representative: Müller-Boré & Partner Patentanwälte PartG mbB

(57) **Abstract**

A computer-implemented method includes adding, using a label management system (LMS), an object-specific multi-value label extension field to an application object (AO) associated with a software application. Using the LMS and to an AO user interface (UI) associated with the AO, a multi-value label UI extension field is added. Using the LMS, a label value table and associated label value maintenance UI is created to maintain label values. Using the LMS, a mapping table is created between the object-specific multi-value label extension field of the AO and the label value table. Using the LMS and the AO UI, label values assigned to the AO are read using foreign key retrieval from the mapping table and the label value table.

## Description

### BACKGROUND

With respect to software applications, for example, integrating machine learning (ML), artificial intelligence (AI), predictions, and clustering can only be performed on existing data attributes (or data attributes created during data engineering). If software application object attributes already qualify as label data for ML training, the object attributes can be used. However, if additional information is required or labels are missing, these must be added during an iterative data preparation pipeline (e.g., data is extracted, cleaned, labeled, and used for training) until a ML model is created with acceptable accuracy. This process is time-consuming and resource intensive. A resultant ML model is created on data that is older than the data preparation and training duration. A delay between data updates and use in a ML model can cause issues for processes integrating ML but needing timely and often changing data.

### SUMMARY

The present disclosure describes providing software application label management for machine learning.

In an implementation, a computer-implemented method, comprises: adding, using a label management system (LMS), an object-specific multi-value label extension field to an application object (AO) associated with a software application; adding, using the LMS and to an AO user interface (UI) associated with the AO, a multi-value label UI extension field; creating, using the LMS, a label value table and associated label value maintenance UI to maintain label values; creating, using the LMS, a mapping table between the object-specific multi-value label extension field of the AO and the label value table; and reading, using the LMS and the AO UI, label values assigned to the AO using foreign key retrieval from the mapping table and the label value table.

The described subject matter can be implemented using a computer-implemented method; a non-transitory, computer-readable medium storing computer-readable instructions to perform the computer-implemented method; and a computer-implemented system comprising one or more computer memory devices interoperably coupled with one or more computers and having tangible, non-transitory, machine-readable media storing instructions that, when executed by the one or more computers, perform the computer-implemented method/the computer-readable instructions stored on the non-transitory, computer-readable medium.

The subject matter described in this specification can be implemented to realize one or more of the following advantages.

Compared to a system where data is labeled based on data exported from an application database with a dedicated data engineering process, the described approach has advantages. First, the described approach enables manual labeling by users within the application with a defined list of usable label values. Second, functionality to enable relabeling of affected instances only is provided. If a label-value set or labeling rule is changed, consistently removing old label values and computing new values without need to process all instances for all label values is allowed. Third, in-system labels are provided. The in-system labels can be used within an application directly at runtime - not only post-export. Fourth, labeling is performed in real-time at runtime, There is no delay between application object instance changes and labeling (e.g., for use in artificial intelligence (AI) for consumption or training).

Compared to key-user extensibility functionality: First, when labeling data flexibility is desired, it is possible to have an n:m relationship between objects and labels (i.e., an object can have many labels and many object (types) can have the same label values). Second, computing a label value for one data record may depend not only on the data record itself (e.g., a row in a table, or an application object) but also on related data or several related data records. Even content in customer extension fields might be desired to be labeled. Third, rules writing label values to an extension field may be triggered, not only by changes to the extended application object, but to other objects. Fourth, functionality to enable relabeling of affected instances only is provided. If a label-value set or labeling rule is changed, consistently removing old label values, and computing new values without need to process all instances for all label values is allowed.

The details of one or more implementations of the subject matter of this specification are set forth in the Detailed Description, the Claims, and the accompanying drawings. Other features, aspects, and advantages of the subject matter will become apparent to those of ordinary skill in the art from the Detailed Description, the Claims, and the accompanying drawings.

### DESCRIPTION OF DRAWINGS

FIG. 1 is a box diagram illustrating objects generated by a label management system (LMS) for extension fields and related label management fields, according to an implementation of the present disclosure.
FIG. 2 is a box diagram illustrating local rules reading from object data and writing label values for the same object instance, according to an implementation of the present disclosure.
FIG. 3 is a box diagram illustrating cross object rules, according to an implementation of the present disclosure.
FIG. 4 is a flowchart illustrating an example of a computer-implemented method for software application label management for machine learning, according to an implementation of the present disclosure.
FIG. 5 is a block diagram illustrating an example of a computer-implemented system used to provide computational functionalities associated with described algorithms, methods, functions, processes, flows, and procedures, according to an implementation of the present disclosure.

Like reference numbers and designations in the various drawings indicate like elements.

### DETAILED DESCRIPTION

The following detailed description describes software application label management for machine learning and is presented to enable any person skilled in the art to make and use the disclosed subject matter in the context of one or more particular implementations. Various modifications, alterations, and permutations of the disclosed implementations can be made and will be readily apparent to those of ordinary skill in the art, and the general principles defined can be applied to other implementations and applications, without departing from the scope of the present disclosure. In some instances, one or more technical details that are unnecessary to obtain an understanding of the described subject matter and that are within the skill of one of ordinary skill in the art may be omitted so as to not obscure one or more described implementations. The present disclosure is not intended to be limited to the described or illustrated implementations, but to be accorded the widest scope consistent with the described principles and features.

With respect to software applications (or "applications"), for example, integrating machine learning (ML), artificial intelligence (AI), predictions, and clustering can only be performed on existing data attributes (or data attributes created during data engineering). If software application object attributes already qualify as label data for ML training, the object attributes can be used. However, if additional information is required or labels are missing, they must be added during an iterative data preparation pipeline (e.g., data is extracted, cleaned, labeled, and used for training) until a ML model is created with acceptable accuracy. This process is time-consuming and resource intensive. A resultant ML model is created on data that is older than the data preparation and training duration. A delay between data updates and use in a ML model can cause issues for processes integrating ML but needing timely and often changing data.

Data within software applications is typically organized in data objects or more generically application objects (AO). Modern software-as-a-Service (SaaS) applications offer user extensibility for AOs to allow users to adjust the standard application to particular needs. The extensions are then provided as lifecycle stable, meaning the extensions do not need to be adjusted in case of an upgrade of the software application (in contrast to modifying former on-premises products and adjusting modification for each new release). Lifecycle stable extensibility for key-users (i.e., experts associated with a software application) is a critical capability for success of a SaaS offering.

If a user wants to enable a SaaS application for ML scenarios, application data is, as previously described, fed into a data engineering pipeline, data is labeled, and a labeled data set is used to train a ML model. Trained ML models can then be integrated into the SaaS application to, for example, automate certain steps, add predictions, and automatic categorization.

Success of the ML model training depends on data quality (and a sufficient number of data sets and other factors) - especially on quality of data labels. Providing good quality data labels and covering all used data records is crucial for success. Labeling data being exported from an application batch-style is a cumbersome, time consuming, and costly process, which is executed by specialized data engineers. If, additionally, user input is desired/required for labeling, costs, and effort to setup such processes increase even further.

A key question is how key-user extensibility can be enhanced to create in-application labeled data during application use, either directly by users of the applications or automatically by rules. What is needed is functionality to derive labels from process knowledge, related data, or even user extension fields, which will increase coverage, reduce costs, reduce time-delay between data creation and model training, and increase training success probability.

The described approach is directed to a Label Management System (LMS) focused on software applications, which executes data labeling embedded into the application at runtime. There is no lag between data creation and labeling and possible use of labels in ML training or in AI features embedded into the application. The approach allows for labeling of single application object instances, as well as using data of related objects. The approach also works with aggregated data. Being embedded in the application at runtime enables altering rules and label sets with minimized need for re-labeling (only impacted instances). The approach is designed around and extending key user extensibility functionality, making it accessible not only to software vendors, but also to users of the application to extend and enrich the provided application with custom data, custom labeling approaches, and user-specific use of AI. Applications are extended to enable integration of MI,-based scenarios.

### Problem Description.

As previously mentioned, AI, predictions, clustering, etc., can only be performed on existing data attributes or the attributes must be created during data engineering. Creating attributed during data engineering results in additional effort and delay between data updates and possible consumption in AI. In other words, creation of updated data lags behind its need in AI.

Using key-user extensibility for label data in extension fields is limited and only solves part of the problem. Data labels can potentially be computed based on code or rules. Alternatively, a large language model (LLM) can be leveraged, where the field values are computed and not necessarily entered by the user. When labeling data flexibility is desired, ideally it would be possible to have an n:m relationship between objects and labels, where an object can have many labels and many object (types) can have the same label values. Computing a label value for one data record may depend not only on the data record itself (e.g., a row in a table, or an application object), but also on related data or several related data records. Labeling content in user extension fields might also be desirable.

Labels are not only derived from local application object data, but potentially on related application objects. Data (such as, standard, or even custom fields) of an instance of an AO of type 1 (e.g., AO1) can be relevant to derive a label to a related instance of another AO of type 2 (e.g., AO2). Updates of the data of an instance in AO2 can then be reflected automatically in a related instance of AO1.

Labels can be required based on aggregated data, aggregate along a header-item relationship within one AO instance, or cross AO instances of the same type. In some cases, creating label data may require computing sums, averages, relative values, etc. Computation requires fields with computed content or a batch job to compute the data.

A data labeling extension can be lifecycle stable. To enable a SaaS application for ML, an extension created for data labeling should be lifecycle stable and continue to run after a SaaS upgrade without adjustment by a key-user. Otherwise, costs for the ML scenario will go up and there will be a delay in use of the ML scenario after the SaaS upgrade, until the key-user has adjusted the data labeling software to the new version of the application.

Label value management is required. Label values are derived from, for example, experience associated with earlier training runs, label value selectivity/significance, and consistency. It is desirable to have a fixed set of values to use, but a starting point might be with a more open, flexible list of labels that can be extended as needed - before consolidating these labels at some point in time by locking down the fixed set of values consistently within a database (DB), and potentially merging no-longer-needed labels into others. Similarly, it might be desirable to make labeling selectively more fine-grained without re-processing all data. In other words, divide one generic label into two more specific labels.

### Approach and Procedure.

The approach is to create an LMS based on principals of lifecycle-stable, key-user extensibility. The approach adds a consistent, automated setup of label extensions in the DB, processes to automatically compute label values, and a user interface (UI) to manage labels and label values.

The LMS is capable of adding a multi-value, label extension field to an AO and a configurable representation multi-value, label extension field on the AO UI. In some implementations, a configurable representation on the AO UI can include an option to show or hide the configurable representation of the multi-value, label extension field on the AO UI or whether to enable user input on the AO UI.

LMS creates a set of DB tables for managing label values (e.g., a label value table) (including a maintenance UI) and mapping tables between the multi-value label extension field at the AO and the label value table. The UI at the AO reads the label values assigned to the AO instance using foreign key retrieval from a mapping table and finally the label value table. The label value table can be used for several different AO types, making use of label values consistent across several AO types, without limiting possible value sets. This enables both: 1) an n:m mapping between objects and labels and 2) a consistent value lifecycle management.

LMS can define rules (for example, business rules or other types of rules), which read values in one AO instance and derive label values in the same AO instance or a related instance of another AO type. A rule can also be a call to a service or an LLM (e.g., if sentiment analysis is desired). The rule is called when an AO instance is created or updated to immediately update the label field of the created or updated AO instance. If a rule is added and there are already instances of the AO, the rule is called in a batch run to re-compute label values for existing instances.

The LMS provides data analysis capabilities regarding label values (e.g., visualize label value selectivity for a set of AO instances (i.e., how many instances have the same label value)). The LMS also provides lifecycle management/maintenance features on the label value table, allowing to map one label value to another value (merge) and only use one value in the future, or to select a label value and define more fine-grained label values (split) and trigger re-labeling for data sets having been labeled with the relevant value. The changes are then not only reflected in the label value table, but a batch job is started to adjust values in mapping tables (e.g., if the value is computed by a rule, a UI to adjust the rule and, for a split, re-run the rules on related data sets).

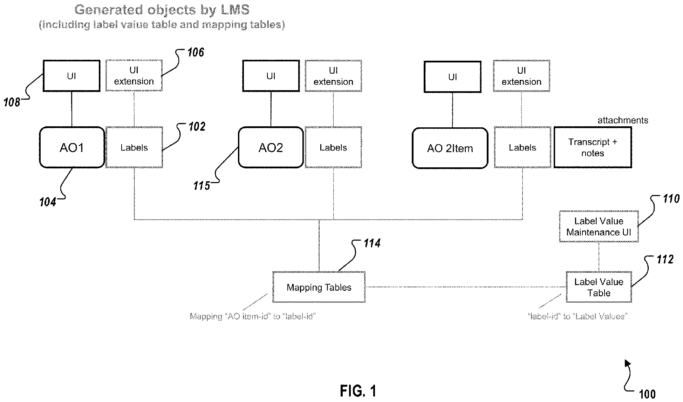

Turning to FIG. 1, FIG. 1 is a box diagram 100 illustrating objects generated by LMS for extension fields and related label management fields, according to an implementation of the present disclosure.

### Details.

### Extension fields, UI, and Generated Label Management Tables.

LMS allows a key-user to add an object-specific multi-value label extension field (or extension field) 102 to an AO (e.g., AO1 104). A multi-value label UI extension field (or UI extension) 106 can also be added to an AO UI 108 and a configurable representation added on the AOUI 108.

The LMS will create an extension field 102 in a DB table storing the AO data for storing a unique item-ID that can then be referenced by a mapping table described below. A key user can decide to hide UI extension 106 on the AO UI 108 (i.e., only existing in the DB but not on the UI) or make it visible to users (i.e., available on the UI) to display a list of referenced labels from a label value table 112 that are mapped by a mapping table 114 to extension field 102.

The key user can also define if the field values are maintainable by users or if the field is read-only for the users and only written by a rule. LMS uses standard extensibility techniques as available, however, with the addition that a field can be multi-value (i.e., the field can hold label values of different dimensions or aspects (e.g., as in the following example: "beginner," "few project contributions," "java")), which is not the case for regular extension fields.

To visualize and manage label values, the label value table 112 is created with a UI (i.e., label value maintenance UI) 110 used to maintain label values in the label value table 112. In some implementations, the label value table 112 has two columns:
▪ Label-ID: a field which can hold a globally unique identifier (GUID), such as an identifier (ID); and
▪ Label-Value: a field which can hold a string.

An example label value table 112 can capture software developer skills as labels:
▪ (label-ID, label-value)
▪ (L1, "beginner")
▪ (L2, "experienced")
▪ (L3, "few project contributions")
▪ (L4, "many project contributions")
▪ (L5, "java")
▪ (L6, "c++").

Using the label value maintenance UI 110, a user can add new entries (such as, (L7, "rust")) or modify an entry (such as, L2 from "experienced" to "advanced"). The UI extension 106 then shows the values of the labels (e.g., "java"), and if maintenance is allowed, it enables a user to select the value for a label from available values (e.g., "beginner" or "experienced").

To manage relations between labels at AOs and label values, a mapping table 114 is created. In some implementations, the mapping table 114 has two columns:
▪ Item-ID: a field which can hold a GUID like ID. This field relates to the AO instance.
▪ Label-ID: a field which can hold a GUID like ID. This field relates to the label value table 112.

An example mapping table 114:
▪ (item-ID, label-ID)
▪ (K11, L1)
▪ (K11, L3)
▪ (K11, L5)
▪ (K12, L2)
▪ (K12, L4)
▪ (K12, L5).

An example AO table extension field 102:
▪ (item-ID)
▪ (K11)
▪ (K12).

If label values can be maintained by users of the application using the UI extension 106, additional functions are needed:
▪ A label value constraint can be created (i.e., so the users can only enter predefined label-values). The label value constraint can be defined using a foreign key relationship between an extension field 102 and label value table 112.
▪ The label value maintenance UI 110 can be created for the label values of the respective label value tables 112. Key users can then maintain allowed values for label values, and users of the application can only use these.
▪ Alternatively, end users may be allowed to extend a list of valid labels by simply adding a new custom value using label value maintenance UI 110, which is then added to the label value table 112.
▪ An administrator can perform a configuration to have one label value table 112 for several extension fields 102 and their respective mapping tables 114, to ease re-using label values for different AOs.
▪ In case an end user is able to add a new label value to the label value table 112, then this label shows up as a new option in all related AOs.

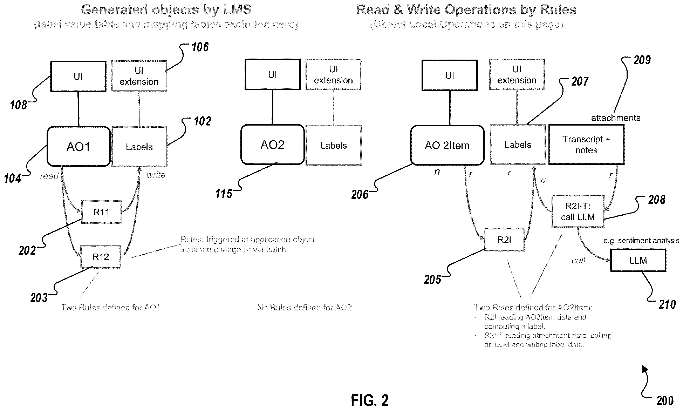

AO1 104 and AO2 115 are different examples of AOs that share a set of labels (and the same mapping table). they are also examples for different aspects, such as "AO2" having a head-item relation to associated "AO2Item" (discussed in FIG. 2). Note that AO2 115 and associated "AO2Item" are related in a 1:n relationship as a "header-item" database structure. For example: "sales order" and "sales order item", respectively.

FIG. 2 is a box diagram 200 illustrating local rules reading from object data and writing label values for the same object instance, according to an implementation of the present disclosure.

To compute label values, rules (R) can be defined, which can be object local operations or cross object operations. For example, object local operations can include R11 202 or R2I-T 204.

For example, rule R11 202 and rule R12 203 can read data from AO1 104 and write to extension field 102 visualized on UI extension 106. Rule R2I 205 reads from AO2Item 206 and writes the label to the extension field 207 (similarly as rule R2I-T 208, reading the "transcript and notes" attachments 209 and writes label values to extension field 207).

A rule is triggered upon execution of change operations (e.g., add, modify, or delete) to the AO instances. Data of the instance can be read by the rule, which can compute a label. The rule writes the item-ID (which references an AO instance (e.g., AO1 104)) to an extension field (e.g., 102 in FIG. 1) and adds the item-ID and the label-ID to the mapping table (e.g., 114 in FIG. 1).

In some implementations, a rule can also call an external component (e.g., an LLM 210) to process data and to permit the LLM 210 to compute a label (e.g., using rule R2I-T 208).

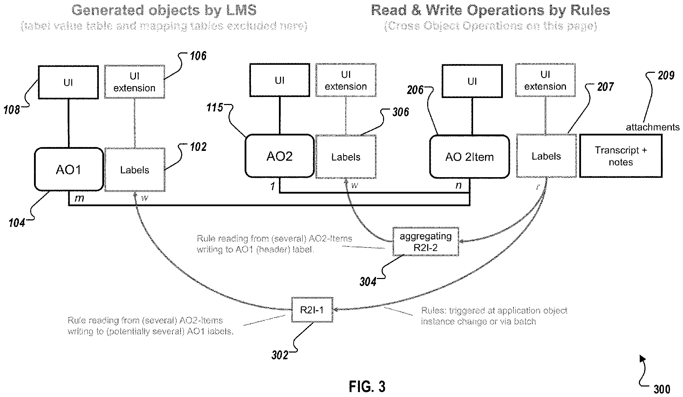

FIG. 3 is a box diagram 300 illustrating cross object rules, according to an implementation of the present disclosure.

Cross object operations (e.g., between AO1 104 and AO2Item 206) can occur (e.g., using rule R2I-1 302). In some implementations, a rule (e.g., R2I-1 302) is triggered upon execution of change operations to the first AO2Item 206 instances (e.g., add, modify, or delete), whose data is read by the rule. The rule then writes the item-ID (which references a second AO1 104 instance) to the extension field 102 and adds the item-ID and the label-ID to a mapping table (e.g., 114 in FIG. 1). A rule R2I-2 304 can also read several values of labels of AO2Item 206 from extension field 207 and compute one label entry for AO2 115 in extension field 306.

### Rule and Label Value Lifecycle Management.

Since a labeling process is part of application use at runtime and no post-use process is executed on a data export, changes to the labeling process needs to be brought into the application and cannot be defined and performed during data engineering on exported data from scratch. Several change operations are required:
A) Add a new rule: new label values will be computed. A new rule is deployed and activated in the application. It will be triggered upon insert, a new application object instance, or modification of an application object instance. To compute labels of existing, old and unchanged instances, a batch job is started, reading all AO instance data and calling the rule to create new label values.
B) Change a rule: Merge two label values (e.g., ID1, value1 and ID2, value2). A new version of the rule is deployed computing only the one new value (ID1, value1). The old label values (ID2, value2) need to be removed: 1) in the mapping table, the obsolete ID2 is changed to the remaining ID1, if ID1 is not already used for the object instance (which would create a duplicate), else ID2 is deleted and 2) afterwards in the label value table, ID2 and value2 are deleted.
C) Change or add a rule to split one label (ID1, value1) value into several (ID2, value2 and ID3, value3) (value2 or value3 can be equivalent to value1, if desired, the IDs can be different). User selects label to be split (e.g., value1, ID1 derived from looking in the label value table). The rule is updated to now compute ID2, value2 and ID3, value3 and activated (now only ID2 and ID3 are written). A background job is started: 1) find item-IDs IID1 in mapping table, having label-ID ID1; 2) apply new rule to instance data related to item-ID IID1 (computing ID2 or ID3), deleting ID1 for this item-ID; delete ID1, value1 from the label value table.
D) Delete a rule: delete related label values. Potentially, also the label values can be deleted (otherwise they are only available for old data or manual user input), but this can be a decision by a user to delete or keep old values. If label values which are written by the rule to be deleted are also written by other rules than the rule to be deleted, deleting only the label values written by the rule to be deleted can consistently be achieved by deleting all label values (written by the rule to be deleted and by other rules) and then re-executing the remaining rules writing the label values (as described in A). The rule is deactivated and undeployed, so it is no longer executed for new AO instances or changed instances. Then the related IDs and label values written by the rule are determined. The rows with these IDs are deleted from the label value table, mapping table.

While a change process runs, the data labels in the DB are not consistent, so usage for AI training is be suspended for the runtime of the change process.

If data is labeled by users and not rules, the change process identifies the item-ID and the user having created or last updated the item-ID (or another mechanism to identify the user labeling data) and creates a list of AO instances to be re-labeled with respect to a certain specification (a human readable spec, so the user knows how to label similar to the coded rule).

A combination of rules based and manual re-labeling is also possible: 1) the rule-based re-labeling process is executed and 2) If the rule determines for some AOs that it requires human input for deciding on the new label (e.g., confidence level of an ML algorithm is too low), then these AOs are post-processed by users as described above.

### Embedded AI Extensions.

If an application embeds AI technology, batch-style exporting of application data for labeling creates too much delay for immediate data consumption, contradicting the benefits of embedding AI. It is a cumbersome, time consuming and costly process, executed by specialized data engineers, which does not work for such embedded AI scenarios.

Intelligent chatbots can provide conversational interactions between humans and applications. The level of functionality is dependent on an extensibility capability associated with the chatbot. The described approach enables extension data, which can be consumed, if the conversational framework is enabled for extensions.

When a user uses an application with a digital assistant to conversationally interact with the application - also extending the application with the user's own fields - the user will very likely want to access the user's own field content with the assistant. It is beneficial to have the user's own fields labeled in such a way that conversational assistants can access the application object data together with the labels defined by the user.

In some implementations, an example extension could resemble: 1) an extension field to an application object; 2) a labeling rule, being triggered internally in the system upon changes to application object data; 3) the digital assistant is configured to read application objects including user fields and labels; and 4) in a conversation, the user's individual labels can be used in the conversation to find application object instances based on own labels or use the labels in output, for grouping, etc.

A user can create an extension in an application as described in this disclosure, including user individual labels. Based on these extension fields in the application, a user can create an "intelligent scenario" and define there to read desired data - including the user's own extension fields. The scenario can use DB internal ML libraries. The data is read from the application plus its extension fields and processed by the DB internal ML libraries. The results can then again be integrated into the application.

In some implementations, an example extension could resemble: 1) an extension field to an application object; 2) a labeling rule, being triggered internally in the system upon changes to application object data; 3) an intelligent scenario reading application object and extension data and processing it in the DB in ML capabilities; 4) an extension to the application using the ML capabilities trained on application and extension data; and 5) the system supervises model management, monitors model accuracy, enables key-users to retrain models, etc.

### Professional Services Area Example.

Scenario:
▪ A project management system can be enhanced to provide recommendations and support, when finding (additional) members for a (new) project, depending on project characteristics and employee (or consultant, or freelancer ...) experience.
▪ Systems, where employees (and consultants ...) maintain their skill set manually are typically outdated, biased and have gaps, also if a new capability is added, a lot of people have to maintain data to catch up, which is usually not happening real time.
▪ The idea is thus to derive employee (and consultant ...) experience from data related to the project automatically.
▪ The derived results are added as labels to the employee (and consultant...) AOs so that an ML model can be trained with this data and provide correct recommendations when looking for suitable team members in a new project.

AOs considered:
▪ AO-DP: Development project,
▪ AO-CR: Code repository,
▪ AO-D: Developers (the employees / consultants / ...), and
▪ AO-L: Training / Learning system.

A developer is attending training and taking learning sessions, such sessions have a known topic and description about the content.

From this description at the "learning object" AO-L, labels for learning content can be derived using a rule, (e.g., calling an LLM analyzing the content and answering with label values. These label values can be stored in AO-L extension field).

A cross-obj ect rule for a developer AO-D, when attending a training AO-L can read the labels assigned to AO-L and derive labels at the developer, such as "several trainings attended on Java," and "training attended several years ago on C++."

A developer will usually also submit code to a code-repo AO-CR. A code-repo contains, for example, code and configuration documents of a certain language (e.g., JavaScript) or type (e.g., docker config). A rule can now be created, for example, for assessing the commits of a developer to a certain repo (e.g., using ML technology to determine the programming language), which type of content is submitted (code, config, docu, ...), and how often. A label can be derived for the developer, such as "frequent code contribution to Java project."

Advanced, reading more repo-related information in the rule, one could even assess, if a developer is correcting bugs for own code a lot etc. leading to an assessment of skill level.

Also, contributions of a developer to earlier projects AO-DP can be assessed with a rule reading project data of projects the developer was assigned to deriving experience of the developer for development projects of certain language, team size, related topic (e.g., AI, user experience (UX), DB, or security).

An example for a label change could be:
▪ Current setting for Java knowledge: 1) L1 - beginner developer: Training attended, zero or 1 contribution and 2) L2 - experienced developer: more than 2 project contributions.
▪ Desired setting for Java knowledge: 1) L211 - Beginner developer: Training attended, but no project contribution; 2) L212 - Early developer: Training attended, one project contribution; 3) L213 - Skilled developer: 2 to 5 project contributions; and 4) L214 - Expert developer: more than 5 contributions.

L1- starting developer: L1 is the label-ID and "starting developer" the label value.

To change labels from L1, L2 to L211, L212, L213, L214, the objects using labels L1 and L2 are retrieved (foreign key relation from the "label value table" to the "mapping table" and the AO instance. Then, replace the rule deriving "starting developer" and "experienced developer" by the new rule deriving "beginner developer," ... "expert developer." Now the new rule can be applied to the AO instances and compute new label values L211 ... L214, replacing values L1 or L2. A batch run can scan for usage of L1 and L2 and apply the new rule, until all occurrences are replaced.

Components of the LMS can include:
▪ Extension Creator - Using key-user extensibility functionality to create / change / delete extension fields to application objects and (optional) exposure of the field on the UI. Can add foreign key check for label values with respect to a "label value table." Can create a "mapping table" and a label value table. A "label value table" can be assigned to several application objects.
▪ Rule Creator - Can create rules in a rule framework. The rule having write permission to a mapping and value table. With triggers, when to call the rule (upon change of content to the application object) - this can be DB mechanism (e.g. trigger), application framework mechanism (after commit exit) or other application events. Can activate / deactivate a rule. Can delete rules or update these by new code or logic in the rule. Can configure a connection to a large language model (LLM) and can update such configuration to another LLM (public or customer owned).
▪ Label Value Manager - Has a UI for every "label value table" so users can define possible label values. Can run a batch job to re-execute rules for certain AO instances. Can consistently remove label-values and related mapping entries. Can execute procedures previously defined under Rule and Label Value Lifecycle Management.

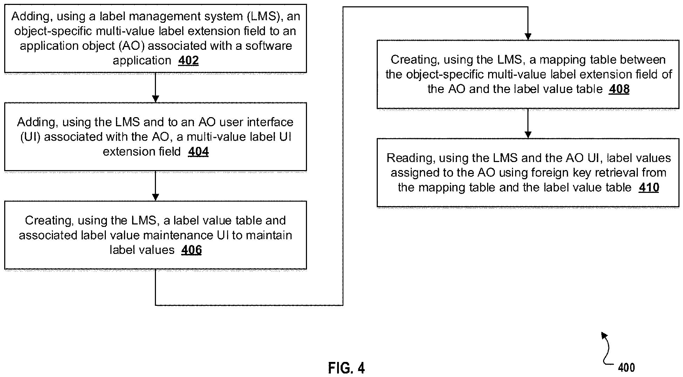

FIG. 4 is a flowchart illustrating an example of a computer-implemented method 400 for software application label management for machine learning, according to an implementation of the present disclosure. For clarity of presentation, the description that follows generally describes method 400 in the context of the other figures in this description. However, it will be understood that method 400 can be performed, for example, by any system, environment, software, and hardware, or a combination of systems, environments, software, and hardware, as appropriate. In some implementations, various steps of method 400 can be run in parallel, in combination, in loops, or in any order.

At 402, using a label management system (LMS), an object-specific multi-value label extension field is added to an application object (AO) associated with a software application. In some implementations, the object-specific multi-value label extension field is added by a key user. From 402, method 400 proceeds to 404.

At 404, using the LMS and to an AO UI associated with the AO, a multi-value label UI extension field is added. A configurable representation of the multi-value label UI extension field is added to the AO UI. In some implementations, the configurable representation of the multi-value label UI extension field includes an option to show or hide the configurable representation on the AO UI or to enable user input on the AO UI. From 404, method 400 proceeds to 406.

At 406, using the LMS, a label value table and associated label value maintenance UI is created to maintain label values. In some implementations, the label value table can be used for different AO types, which enables a n:m mapping between AOs and labels. From 406, method 400 proceeds to 408.

At 408, using the LMS, a mapping table between the object-specific multi-value label extension field of the AO and the label value table is created. From 408, method 400 proceeds to 410.

At 410, using the LMS and the AO UI, label values assigned to the AO are read using foreign key retrieval from the mapping table and the label value table. After 410, method 400 can stop.

In some implementations, using the LMS, a rule can be defined which: 1) reads values in one AO instance and derives label values in the one AO instance or a related instance of another AO type or 2) immediately updates an object-specific multi-value label extension field of a created or updated AO instance when the AO instance is created or updated.

In some implementations, using the LMS, a rule can be defined which calls an external service or large language model (LLM).

In some implementations, using the LMS, data analysis capabilities can be provided with respect to label values, wherein the data analysis capabilities include visualization of label value selectivity.

In some implementations, the LMS can provide lifecycle management features on the label value table, wherein the lifecycle management features include: 1) merging one label value to another value and 2) selecting a label value and defining more fine-grained label values with associated triggered relabeling of data sets previously labeled with a relevant value. In some implementations, changes are not only reflected in the label value table, but the mapping table is updated using a batch job.

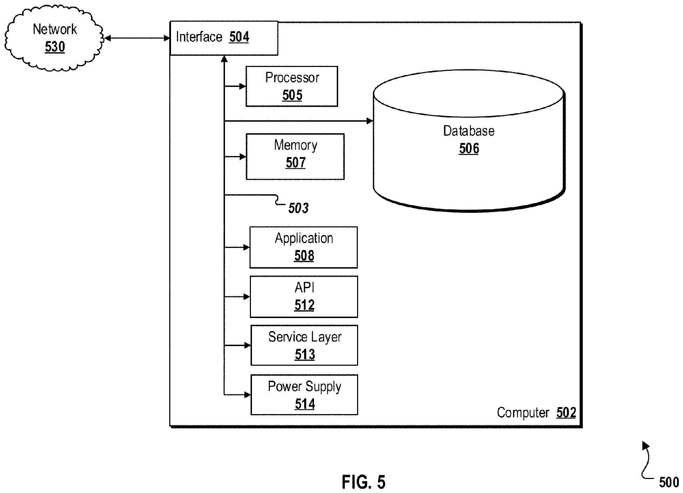

FIG. 5 is a block diagram illustrating an example of a computer-implemented system 500 used to provide computational functionalities associated with described algorithms, methods, functions, processes, flows, and procedures, according to an implementation of the present disclosure. In the illustrated implementation, computer-implemented system 500 includes a Computer 502 and a Network 530.

The illustrated Computer 502 is intended to encompass any computing device, such as a server, desktop computer, laptop/notebook computer, wireless data port, smart phone, personal data assistant (PDA), tablet computer, one or more processors within these devices, or a combination of computing devices, including physical or virtual instances of the computing device, or a combination of physical or virtual instances of the computing device. Additionally, the Computer 502 can include an input device, such as a keypad, keyboard, or touch screen, or a combination of input devices that can accept user information, and an output device that conveys information associated with the operation of the Computer 502, including digital data, visual, audio, another type of information, or a combination of types of information, on a graphical-type user interface (UI) (or GUI) or other UI.

The Computer 502 can serve in a role in a distributed computing system as, for example, a client, network component, a server, or a database or another persistency, or a combination of roles for performing the subject matter described in the present disclosure. The illustrated Computer 502 is communicably coupled with a Network 530. In some implementations, one or more components of the Computer 502 can be configured to operate within an environment, or a combination of environments, including cloud-computing, local, or global.

At a high level, the Computer 502 is an electronic computing device operable to receive, transmit, process, store, or manage data and information associated with the described subject matter. According to some implementations, the Computer 502 can also include or be communicably coupled with a server, such as an application server, e-mail server, web server, caching server, or streaming data server, or a combination of servers.

The Computer 502 can receive requests over Network 530 (for example, from a client software application executing on another Computer 502) and respond to the received requests by processing the received requests using a software application or a combination of software applications. In addition, requests can also be sent to the Computer 502 from internal users (for example, from a command console or by another internal access method), external or third-parties, or other entities, individuals, systems, or computers.

Each of the components of the Computer 502 can communicate using a System Bus 503. In some implementations, any or all of the components of the Computer 502, including hardware, software, or a combination of hardware and software, can interface over the System Bus 503 using an application programming interface (API) 512, a Service Layer 513, or a combination of the API 512 and Service Layer 513. The API 512 can include specifications for routines, data structures, and object classes. The API 512 can be either computer-language independent or dependent and refer to a complete interface, a single function, or even a set of APIs. The Service Layer 513 provides software services to the Computer 502 or other components (whether illustrated or not) that are communicably coupled to the Computer 502. The functionality of the Computer 502 can be accessible for all service consumers using the Service Layer 513. Software services, such as those provided by the Service Layer 513, provide reusable, defined functionalities through a defined interface. For example, the interface can be software written in a computing language (for example JAVA or C++) or a combination of computing languages, and providing data in a particular format (for example, extensible markup language (XML)) or a combination of formats. While illustrated as an integrated component of the Computer 502, alternative implementations can illustrate the API 512 or the Service Layer 513 as stand-alone components in relation to other components of the Computer 502 or other components (whether illustrated or not) that are communicably coupled to the Computer 502. Moreover, any or all parts of the API 512 or the Service Layer 513 can be implemented as a child or a sub-module of another software module, enterprise application, or hardware module without departing from the scope of the present disclosure.

The Computer 502 includes an Interface 504. Although illustrated as a single Interface 504, two or more Interfaces 504 can be used according to particular needs, desires, or particular implementations of the Computer 502. The Interface 504 is used by the Computer 502 for communicating with another computing system (whether illustrated or not) that is communicatively linked to the Network 530 in a distributed environment. Generally, the Interface 504 is operable to communicate with the Network 530 and includes logic encoded in software, hardware, or a combination of software and hardware. More specifically, the Interface 504 can include software supporting one or more communication protocols associated with communications such that the Network 530 or hardware of Interface 504 is operable to communicate physical signals within and outside of the illustrated Computer 502.

The Computer 502 includes a Processor 505. Although illustrated as a single Processor 505, two or more Processors 505 can be used according to particular needs, desires, or particular implementations of the Computer 502. Generally, the Processor 505 executes instructions and manipulates data to perform the operations of the Computer 502 and any algorithms, methods, functions, processes, flows, and procedures as described in the present disclosure.

The Computer 502 also includes a Database 506 that can hold data for the Computer 502, another component communicatively linked to the Network 530 (whether illustrated or not), or a combination of the Computer 502 and another component. For example, Database 506 can be an in-memory or conventional database storing data consistent with the present disclosure. In some implementations, Database 506 can be a combination of two or more different database types (for example, a hybrid in-memory and conventional database) according to particular needs, desires, or particular implementations of the Computer 502 and the described functionality. Although illustrated as a single Database 506, two or more databases of similar or differing types can be used according to particular needs, desires, or particular implementations of the Computer 502 and the described functionality. While Database 506 is illustrated as an integral component of the Computer 502, in alternative implementations, Database 506 can be external to the Computer 502. The Database 506 can hold and operate on at least any data type mentioned or any data type consistent with this disclosure.

The Computer 502 also includes a Memory 507 that can hold data for the Computer 502, another component or components communicatively linked to the Network 530 (whether illustrated or not), or a combination of the Computer 502 and another component. Memory 507 can store any data consistent with the present disclosure. In some implementations, Memory 507 can be a combination of two or more different types of memory (for example, a combination of semiconductor and magnetic storage) according to particular needs, desires, or particular implementations of the Computer 502 and the described functionality. Although illustrated as a single Memory 507, two or more Memories 507 or similar or differing types can be used according to particular needs, desires, or particular implementations of the Computer 502 and the described functionality. While Memory 507 is illustrated as an integral component of the Computer 502, in alternative implementations, Memory 507 can be external to the Computer 502.

The Application 508 is an algorithmic software engine providing functionality according to particular needs, desires, or particular implementations of the Computer 502, particularly with respect to functionality described in the present disclosure. For example, Application 508 can serve as one or more components, modules, or applications. Further, although illustrated as a single Application 508, the Application 508 can be implemented as multiple Applications 508 on the Computer 502. In addition, although illustrated as integral to the Computer 502, in alternative implementations, the Application 508 can be external to the Computer 502.

The Computer 502 can also include a Power Supply 514. The Power Supply 514 can include a rechargeable or non-rechargeable battery that can be configured to be either user- or non-user-replaceable. In some implementations, the Power Supply 514 can include power-conversion or management circuits (including recharging, standby, or another power management functionality). In some implementations, the Power Supply 514 can include a power plug to allow the Computer 502 to be plugged into a wall socket or another power source to, for example, power the Computer 502 or recharge a rechargeable battery.

There can be any number of Computers 502 associated with, or external to, a computer system containing Computer 502, each Computer 502 communicating over Network 530. Further, the term "client," "user," or other appropriate terminology can be used interchangeably, as appropriate, without departing from the scope of the present disclosure. Moreover, the present disclosure contemplates that many users can use one Computer 502, or that one user can use multiple computers 502.

Described implementations of the subject matter can include one or more features, alone or in combination.

For example, in a first implementation, a computer-implemented method, comprising: adding, using a label management system (LMS), an object-specific multi-value label extension field to an application object (AO) associated with a software application; adding, using the LMS and to an AO user interface (UI) associated with the AO, a multi-value label UI extension field; creating, using the LMS, a label value table and associated label value maintenance UI to maintain label values; creating, using the LMS, a mapping table between the object-specific multi-value label extension field of the AO and the label value table; and reading, using the LMS and the AO UI, label values assigned to the AO using foreign key retrieval from the mapping table and the label value table.

The foregoing and other described implementations can each, optionally, include one or more of the following features:

A first feature, combinable with any of the following features, wherein the object-specific multi-value label extension field is added by a key user.

A second feature, combinable with any of the previous or following features, comprising: adding a configurable representation of the multi-value label UI extension field to the AO UI.

A third feature, combinable with any of the previous or following features, wherein the configurable representation of the multi-value label UI extension field includes an option to show or hide the configurable representation on the AO UI or to enable user input on the AO UI.

A fourth feature, combinable with any of the previous or following features, wherein the label value table can be used for different AO types, which enables a n:m mapping between AOs and labels.

A fifth feature, combinable with any of the previous or following features, comprising: defining, using the LMS, a rule which: 1) reads values in one AO instance and derives label values in the one AO instance or a related instance of another AO type or 2) immediately updates an object-specific multi-value label extension field of a created or updated AO instance when the AO instance is created or updated.

A sixth feature, combinable with any of the previous or following features, comprising: defining, using the LMS, a rule which calls an external service or large language model (LLM).

A seventh feature, combinable with any of the previous or following features, comprising: providing, using the LMS, data analysis capabilities with respect to label values, wherein the data analysis capabilities include visualization of label value selectivity.

An eighth feature, combinable with any of the previous or following features, comprising: providing, by the LMS, lifecycle management features on the label value table, wherein the lifecycle management features comprise: 1) merging one label value to another value and 2) selecting a label value and defining more fine-grained label values with associated triggered relabeling of data sets previously labeled with a relevant value.

A ninth feature, combinable with any of the previous or following features, wherein changes are not only reflected in the label value table, but the mapping table is updated using a batch job.

In a second implementation, a non-transitory, computer-readable medium storing one or more instructions executable by a computer system to perform one or more operations, comprising: adding, using a label management system (LMS), an object-specific multi-value label extension field to an application object (AO) associated with a software application; adding, using the LMS and to an AO user interface (UI) associated with the AO, a multi-value label UI extension field; creating, using the LMS, a label value table and associated label value maintenance UI to maintain label values; creating, using the LMS, a mapping table between the object-specific multi-value label extension field of the AO and the label value table; and reading, using the LMS and the AO UI, label values assigned to the AO using foreign key retrieval from the mapping table and the label value table.

The foregoing and other described implementations can each, optionally, include one or more of the following features:
A first feature, combinable with any of the following features, wherein the object-specific multi-value label extension field is added by a key user.

A second feature, combinable with any of the previous or following features, comprising: adding a configurable representation of the multi-value label UI extension field to the AO UI.

A third feature, combinable with any of the previous or following features, wherein the configurable representation of the multi-value label UI extension field includes an option to show or hide the configurable representation on the AO UI or to enable user input on the AO UI.

A fourth feature, combinable with any of the previous or following features, wherein the label value table can be used for different AO types, which enables a n:m mapping between AOs and labels.

A fifth feature, combinable with any of the previous or following features, comprising: defining, using the LMS, a rule which: 1) reads values in one AO instance and derives label values in the one AO instance or a related instance of another AO type or 2) immediately updates an object-specific multi-value label extension field of a created or updated AO instance when the AO instance is created or updated.

A sixth feature, combinable with any of the previous or following features, comprising: defining, using the LMS, a rule which calls an external service or large language model (LLM).

A seventh feature, combinable with any of the previous or following features, comprising: providing, using the LMS, data analysis capabilities with respect to label values, wherein the data analysis capabilities include visualization of label value selectivity.

An eighth feature, combinable with any of the previous or following features, comprising: providing, by the LMS, lifecycle management features on the label value table, wherein the lifecycle management features comprise: 1) merging one label value to another value and 2) selecting a label value and defining more fine-grained label values with associated triggered relabeling of data sets previously labeled with a relevant value.

A ninth feature, combinable with any of the previous or following features, wherein changes are not only reflected in the label value table, but the mapping table is updated using a batch job.

In a third implementation, a computer-implemented system, comprising: one or more computers; and one or more computer memory devices interoperably coupled with the one or more computers and having tangible, non-transitory, machine-readable media storing one or more instructions that, when executed by the one or more computers, perform one or more operations, comprising: adding, using a label management system (LMS), an object-specific multi-value label extension field to an application object (AO) associated with a software application; adding, using the LMS and to an AO user interface (UI) associated with the AO, a multi-value label UI extension field; creating, using the LMS, a label value table and associated label value maintenance UI to maintain label values; creating, using the LMS, a mapping table between the object-specific multi-value label extension field of the AO and the label value table; and reading, using the LMS and the AO UI, label values assigned to the AO using foreign key retrieval from the mapping table and the label value table.

The foregoing and other described implementations can each, optionally, include one or more of the following features:
A first feature, combinable with any of the following features, wherein the object-specific multi-value label extension field is added by a key user.

A second feature, combinable with any of the previous or following features, comprising: adding a configurable representation of the multi-value label UI extension field to the AO UI.

A third feature, combinable with any of the previous or following features, wherein the configurable representation of the multi-value label UI extension field includes an option to show or hide the configurable representation on the AO UI or to enable user input on the AO UI.

A fourth feature, combinable with any of the previous or following features, wherein the label value table can be used for different AO types, which enables a n:m mapping between AOs and labels.

A fifth feature, combinable with any of the previous or following features, comprising: defining, using the LMS, a rule which: 1) reads values in one AO instance and derives label values in the one AO instance or a related instance of another AO type or 2) immediately updates an object-specific multi-value label extension field of a created or updated AO instance when the AO instance is created or updated.

A sixth feature, combinable with any of the previous or following features, comprising: defining, using the LMS, a rule which calls an external service or large language model (LLM).

A seventh feature, combinable with any of the previous or following features, comprising: providing, using the LMS, data analysis capabilities with respect to label values, wherein the data analysis capabilities include visualization of label value selectivity.

An eighth feature, combinable with any of the previous or following features, comprising: providing, by the LMS, lifecycle management features on the label value table, wherein the lifecycle management features comprise: 1) merging one label value to another value and 2) selecting a label value and defining more fine-grained label values with associated triggered relabeling of data sets previously labeled with a relevant value.

A ninth feature, combinable with any of the previous or following features, wherein changes are not only reflected in the label value table, but the mapping table is updated using a batch job.

Implementations of the subject matter and the functional operations described in this specification can be implemented in digital electronic circuitry, in tangibly embodied computer software or firmware, in computer hardware, including the structures disclosed in this specification and their structural equivalents, or in combinations of one or more of them. Software implementations of the described subject matter can be implemented as one or more computer programs, that is, one or more modules of computer program instructions encoded on a tangible, non-transitory, computer-readable medium for execution by, or to control the operation of, a computer or computer-implemented system. Alternatively, or additionally, the program instructions can be encoded in/on an artificially generated propagated signal, for example, a machine-generated electrical, optical, or electromagnetic signal that is generated to encode information for transmission to a receiver apparatus for execution by a computer or computer-implemented system. The computer-storage medium can be a machine-readable storage device, a machine-readable storage substrate, a random or serial access memory device, or a combination of computer-storage mediums. Configuring one or more computers means that the one or more computers have installed hardware, firmware, or software (or combinations of hardware, firmware, and software) so that when the software is executed by the one or more computers, particular computing operations are performed. The computer storage medium is not, however, a propagated signal.

The term "real-time," "real time," "realtime," "real (fast) time (RFT)," "near(ly) real-time (NRT)," "quasi real-time," or similar terms (as understood by one of ordinary skill in the art), means that an action and a response are temporally proximate such that an individual perceives the action and the response occurring substantially simultaneously. For example, the time difference for a response to display (or for an initiation of a display) of data following the individual's action to access the data can be less than 1 millisecond (ms), less than 1 second (s), or less than 5 s. While the requested data need not be displayed (or initiated for display) instantaneously, it is displayed (or initiated for display) without any intentional delay, taking into account processing limitations of a described computing system and time required to, for example, gather, accurately measure, analyze, process, store, or transmit the data.

The terms "data processing apparatus," "computer," "computing device," or "electronic computer device" (or an equivalent term as understood by one of ordinary skill in the art) refer to data processing hardware and encompass all kinds of apparatuses, devices, and machines for processing data, including by way of example, a programmable processor, a computer, or multiple processors or computers. The computer can also be, or further include special-purpose logic circuitry, for example, a central processing unit (CPU), a field-programmable gate array (FPGA), or an application-specific integrated circuit (ASIC). In some implementations, the computer or computer-implemented system or special-purpose logic circuitry (or a combination of the computer or computer-implemented system and special-purpose logic circuitry) can be hardware- or software-based (or a combination of both hardware- and software-based). The computer can optionally include code that creates an execution environment for computer programs, for example, code that constitutes processor firmware, a protocol stack, a database management system, an operating system, or a combination of execution environments. The present disclosure contemplates the use of a computer or computer-implemented system with an operating system, for example LINUX, UNIX, WINDOWS, MAC OS, ANDROID, or IOS, or a combination of operating systems.

A computer program, which can also be referred to or described as a program, software, a software application, a unit, a module, a software module, a script, code, or other component can be written in any form of programming language, including compiled or interpreted languages, or declarative or procedural languages, and it can be deployed in any form, including, for example, as a stand-alone program, module, component, or subroutine, for use in a computing environment. A computer program can, but need not, correspond to a file in a file system. A program can be stored in a portion of a file that holds other programs or data, for example, one or more scripts stored in a markup language document, in a single file dedicated to the program in question, or in multiple coordinated files, for example, files that store one or more modules, sub-programs, or portions of code. A computer program can be deployed to be executed on one computer or on multiple computers that are located at one site or distributed across multiple sites and interconnected by a communication network.

While portions of the programs illustrated in the various figures can be illustrated as individual components, such as units or modules, that implement described features and functionality using various objects, methods, or other processes, the programs can instead include a number of sub-units, sub-modules, third-party services, components, libraries, and other components, as appropriate. Conversely, the features and functionality of various components can be combined into single components, as appropriate. Thresholds used to make computational determinations can be statically, dynamically, or both statically and dynamically determined.

Described methods, processes, or logic flows represent one or more examples of functionality consistent with the present disclosure and are not intended to limit the disclosure to the described or illustrated implementations, but to be accorded the widest scope consistent with described principles and features. The described methods, processes, or logic flows can be performed by one or more programmable computers executing one or more computer programs to perform functions by operating on input data and generating output data. The methods, processes, or logic flows can also be performed by, and computers can also be implemented as, special-purpose logic circuitry, for example, a CPU, an FPGA, or an ASIC.

Computers for the execution of a computer program can be based on general or special-purpose microprocessors, both, or another type of CPU. Generally, a CPU will receive instructions and data from and write to a memory. The essential elements of a computer are a CPU, for performing or executing instructions, and one or more memory devices for storing instructions and data. Generally, a computer will also include, or be operatively coupled to, receive data from or transfer data to, or both, one or more mass storage devices for storing data, for example, magnetic, magneto-optical disks, or optical disks. However, a computer need not have such devices. Moreover, a computer can be embedded in another device, for example, a mobile telephone, a personal digital assistant (PDA), a mobile audio or video player, a game console, a global positioning system (GPS) receiver, or a portable memory storage device, for example, a universal serial bus (USB) flash drive, to name just a few.

Non-transitory computer-readable media for storing computer program instructions and data can include all forms of permanent/non-permanent or volatile/non-volatile memory, media and memory devices, including by way of example semiconductor memory devices, for example, random access memory (RAM), read-only memory (ROM), phase change memory (PRAM), static random access memory (SRAM), dynamic random access memory (DRAM), erasable programmable read-only memory (EPROM), electrically erasable programmable read-only memory (EEPROM), and flash memory devices; magnetic devices, for example, tape, cartridges, cassettes, internal/removable disks; magneto-optical disks; and optical memory devices, for example, digital versatile/video disc (DVD), compact disc (CD)-ROM, DVD+/-R, DVD-RAM, DVD-ROM, high-definition/density (HD)-DVD, and BLU-RAY/BLU-RAY DISC (BD), and other optical memory technologies. The memory can store various objects or data, including caches, classes, frameworks, applications, modules, backup data, jobs, web pages, web page templates, data structures, database tables, repositories storing dynamic information, or other appropriate information including any parameters, variables, algorithms, instructions, rules, constraints, or references. Additionally, the memory can include other appropriate data, such as logs, policies, security or access data, or reporting files. The processor and the memory can be supplemented by, or incorporated in, special-purpose logic circuitry.

To provide for interaction with a user, implementations of the subject matter described in this specification can be implemented on a computer having a display device, for example, a cathode ray tube (CRT), liquid crystal display (LCD), light emitting diode (LED), or plasma monitor, for displaying information to the user and a keyboard and a pointing device, for example, a mouse, trackball, or trackpad by which the user can provide input to the computer. Input can also be provided to the computer using a touchscreen, such as a tablet computer surface with pressure sensitivity or a multi-touch screen using capacitive or electric sensing. Other types of devices can be used to interact with the user. For example, feedback provided to the user can be any form of sensory feedback (such as, visual, auditory, tactile, or a combination of feedback types). Input from the user can be received in any form, including acoustic, speech, or tactile input. In addition, a computer can interact with the user by sending documents to and receiving documents from a client computing device that is used by the user (for example, by sending web pages to a web browser on a user's mobile computing device in response to requests received from the web browser).

The term "graphical user interface (GUI) can be used in the singular or the plural to describe one or more graphical user interfaces and each of the displays of a particular graphical user interface. Therefore, a GUI can represent any graphical user interface, including but not limited to, a web browser, a touch screen, or a command line interface (CLI) that processes information and efficiently presents the information results to the user. In general, a GUI can include a number of user interface (UI) elements, some or all associated with a web browser, such as interactive fields, pull-down lists, and buttons. These and other UI elements can be related to or represent the functions of the web browser.

Implementations of the subject matter described in this specification can be implemented in a computing system that includes a back-end component, for example, as a data server, or that includes a middleware component, for example, an application server, or that includes a front-end component, for example, a client computer having a graphical user interface or a Web browser through which a user can interact with an implementation of the subject matter described in this specification, or any combination of one or more such back-end, middleware, or front-end components. The components of the system can be interconnected by any form or medium of wireline or wireless digital data communication (or a combination of data communication), for example, a communication network. Examples of communication networks include a local area network (LAN), a radio access network (RAN), a metropolitan area network (MAN), a wide area network (WAN), Worldwide Interoperability for Microwave Access (WIMAX), a wireless local area network (WLAN) using, for example, 802.11x or other protocols, all or a portion of the Internet, another communication network, or a combination of communication networks. The communication network can communicate with, for example, Internet Protocol (IP) packets, frame relay frames, Asynchronous Transfer Mode (ATM) cells, voice, video, data, or other information between network nodes.

The computing system can include clients and servers. A client and server are generally remote from each other and typically interact through a communication network. The relationship of client and server arises by virtue of computer programs running on the respective computers and having a client-server relationship to each other.

While this specification contains many specific implementation details, these should not be construed as limitations on the scope of any inventive concept or on the scope of what can be claimed, but rather as descriptions of features that can be specific to particular implementations of particular inventive concepts. Certain features that are described in this specification in the context of separate implementations can also be implemented, in combination, in a single implementation. Conversely, various features that are described in the context of a single implementation can also be implemented in multiple implementations, separately, or in any sub-combination. Moreover, although previously described features can be described as acting in certain combinations and even initially claimed as such, one or more features from a claimed combination can, in some cases, be excised from the combination, and the claimed combination can be directed to a sub-combination or variation of a sub-combination.

Particular implementations of the subject matter have been described. Other implementations, alterations, and permutations of the described implementations are within the scope of the following claims as will be apparent to those skilled in the art. While operations are depicted in the drawings or claims in a particular order, this should not be understood as requiring that such operations be performed in the particular order shown or in sequential order, or that all illustrated operations be performed (some operations can be considered optional), to achieve desirable results. In certain circumstances, multitasking or parallel processing (or a combination of multitasking and parallel processing) can be advantageous and performed as deemed appropriate.

The separation or integration of various system modules and components in the previously described implementations should not be understood as requiring such separation or integration in all implementations, and it should be understood that the described program components and systems can generally be integrated together in a single software product or packaged into multiple software products.

Accordingly, the previously described example implementations do not define or constrain the present disclosure. Other changes, substitutions, and alterations are also possible without departing from the scope of the present disclosure.

Furthermore, any claimed implementation is considered to be applicable to at least a computer-implemented method; a non-transitory, computer-readable medium storing computer-readable instructions to perform the computer-implemented method; and a computer system comprising a computer memory interoperably coupled with a hardware processor configured to perform the computer-implemented method or the instructions stored on the non-transitory, computer-readable medium.

## Claims

1. A computer-implemented method, comprising:
adding, using a label management system (LMS), an object-specific multi-value label extension field to an application object (AO) associated with a software application;
adding, using the LMS and to an AO user interface (UI) associated with the AO, a multi-value label UI extension field;
creating, using the LMS, a label value table and associated label value maintenance UI to maintain label values;
creating, using the LMS, a mapping table between the object-specific multi-value label extension field of the AO and the label value table; and
reading, using the LMS and the AO UI, label values assigned to the AO using foreign key retrieval from the mapping table and the label value table.

2. The computer-implemented method of claim 1, wherein the object-specific multi-value label extension field is added by a key user.

3. The computer-implemented method of claim 1 or 2, comprising:
adding a configurable representation of the multi-value label UI extension field to the AO UI.

4. The computer-implemented method of any one of the preceding claims, wherein the configurable representation of the multi-value label UI extension field includes an option to show or hide the configurable representation on the AO UI or to enable user input on the AO UI.

5. The computer-implemented method of any one of the preceding claims, wherein the label value table can be used for different AO types, which enables a n:m mapping between AOs and labels.

6. The computer-implemented method of any one of the preceding claims, comprising:
defining, using the LMS, a rule which: 1) reads values in one AO instance and derives label values in the one AO instance or a related instance of another AO type or 2) immediately updates an object-specific multi-value label extension field of a created or updated AO instance when the AO instance is created or updated.

7. The computer-implemented method of any one of the preceding claims, comprising:
defining, using the LMS, a rule which calls an external service or large language model (LLM).

8. The computer-implemented method of any one of the preceding claims, comprising:
providing, using the LMS, data analysis capabilities with respect to label values, wherein the data analysis capabilities include visualization of label value selectivity.

9. The computer-implemented method of any one of the preceding claims, comprising:
providing, by the LMS, lifecycle management features on the label value table, wherein the lifecycle management features comprise: 1) merging one label value to another value and 2) selecting a label value and defining more fine-grained label values with associated triggered relabeling of data sets previously labeled with a relevant value.

10. The computer-implemented method of any one of the preceding claims, wherein changes are not only reflected in the label value table, but the mapping table is updated using a batch job.

11. A non-transitory, computer-readable medium storing one or more instructions executable by a computer system to perform one or more operations according to the method of any one of claims 1 to 10.

12. A computer-implemented system, comprising:
one or more computers; and
one or more computer memory devices interoperably coupled with the one or more computers and having tangible, non-transitory, machine-readable media storing one or more instructions that, when executed by the one or more computers, perform one or more operations according to the method of any one of claims 1 to 10.
